# EUROPEAN PATENT APPLICATION

(11) **EP 2 886 562 A1**
(43) Date of publication of application: **24.06.2015**
(21) Application number: 14170970.9
(22) Date of filing: 03.06.2014
(51) Int. Cl.: C08F 14/06, C08F 4/80

(54) **Process for the manufacture of vinyl chloride polymers**

(30) Priority: 20.12.2013 EP 13199038
(71) Applicant: Solvay SA, 1120 Bruxelles (BE)
(72) Inventor: Hermant, Thomas, 1340 Ottignies (BE); Bodart, Vincent, 5001 Namur (BE)
(74) Representative: Vande Gucht, Anne

(57) **Abstract**

Process for the manufacture of a vinyl chloride polymer by polymerization of vinyl chloride and possibly of at least one comonomer of vinyl chloride, characterized in that the catalyst used for the polymerization comprises a palladium catalyst selected from palladium catalysts responding to formula I 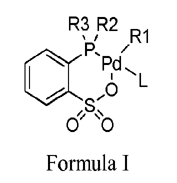 in which R1 is selected from methyl, neopentyl, benzyl and other carbyls which do not contain hydrogen in beta position to the metal, L is a weakly coordinated ligand and R2 and R3 are respectively either *tert.* -butyl and phenyl or both cyclohexyl and further characterized in that the ratio of the number of moles of vinyl chloride and possibly of the at least one comonomer of vinyl chloride, to the number of moles of the palladium catalyst is of at least 200.

## Description

The present invention relates to a process for the manufacture of vinyl chloride polymers.

Metal-catalyzed coordination - insertion polymerization of olefins, like ethylene and propylene, is practiced on a large scale. However, coordination-insertion polymerization of polar vinyl monomers still remains a significant challenge in polymer synthesis (A. Nakamura et al., Chem. Rev., 2009, 109, 5215-5244).

With the development of late transition polymerization catalysts, significant progress in the copolymerization of polar vinyl monomers has been made, such that ethylene copolymers with acrylates, acrylonitrile, vinyl acetate, vinyl fluoride, allylic monomers, acrylic acid, acrylamides are now available by insertion polymerization. Even the homooligomerization of methyl acrylate has been reported.

Among the polar vinyl monomers, vinyl chloride (VC) is a particularly attractive monomer for coordination - insertion polymerization/copolymerization because polyvinyl chloride polymers (PVC) and VC copolymers are important commercial materials.

First attempts made to polymerize VC by coordination - insertion led to the conclusion that the polymerization is problematic due to the side reactions arising from the activated chlorine atom, particularly β-chloride elimination. The reason of this reactivity is not the reluctance of VC to insert into a metal-carbon bond, but the high thermodynamic propensity for β-chloride elimination after net 1,2-VC insertion to form olefin products and catalytically inactive metal-chloro complexes. While calculations using density functional theory (DFT) (Harold W. Boone, Phillip S. Athey, Michael J. Mullins, Dean Philipp, Richard Muller and William A. Goddard, J. Am. Chem. Soc., 2002, 124, 8790-8791 and Dean M. Philipp, Richard P. Muller, William A. Goddard, III, Joey Storer, Mark McAdon and Mike Mullins, J. Am. Chem. Soc., 2002, 124, 10198-10210) and experimental evidence point to an initial 2,1-insertion of VC into the metal-carbon bond, the propensity of late transition polymerization catalysts for "chain-walking" has been identified as source of the detrimental 1,2-net insertion of VC in, e.g. α-diimine palladium catalysts (Stephen R. Foley, Robert A. Stockland, Jr., Han Shen and Richard F. Jordan, J. Am. Chem. Soc., 2003, 125, 4350-4361 and Stefan M. Kilyanek, Edward J. Stoebenau, III, Nawaporn Vinayavekhin and Richard F. Jordan, Organometallics, 2010, 29, 1750-1760). A similar reactivity towards VC has been experimentally disclosed for bis(imino)pyridine- iron and cobalt complexes, for salicylaldiminato- and for phosphineenolato nickel complexes (Stephen R. Foley, Robert A. Stockland, Jr., Han Shen and Richard F. Jordan, J. Am. Chem. Soc., 2003, 125, 4350-4361).

Recently, cationic phosphine-phosphine oxide palladium catalysts have been reported to exhibit reduced ethylene polymerization activity in the presence of VC (Brad P. Carrow and Kyoko Nozaki, J. Am. Chem. Soc., 2012, 134, 8802-8805). However, ethylene homopolymer without detectable chlorine content was formed by these catalysts.

Very recently, it was however demonstrated that specific phosphine-sulfonato palladium complexes catalyze the formation of chlorinated copolymers from ethylene and VC owing to a partial suppression of chain walking after monomer insertion (Hannes Leicht, Inigo Göttker-Schnetmann and Stefan Mecking, Angew. Chem. Int. Ed., 2013, 52, 3963-3966). This was the first time that an insertion copolymerization of VC with ethylene has yielded chlorine-containing copolymers.

However, while this study led to the incorporation of VC units into a ethylene polymer chain, it did not lead to the preparation of VC polymers. It therefore remains a need to obtain such polymers.

The present invention aims to overcome the above-mentioned drawbacks by providing a process allowing the manufacture of VC polymers.

Accordingly, the present invention relates to a process for the manufacture of a vinyl chloride polymer by polymerization of vinyl chloride and possibly of at least one comonomer of vinyl chloride, characterized in that the catalyst used for the polymerization comprises a palladium catalyst selected from palladium catalysts responding to formula I 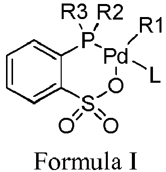 in which R1 is selected from methyl, neopentyl, benzyl and other carbyls which do not contain hydrogen in beta position to the metal, L is a weakly coordinated ligand and R2 and R3 are respectively either *tert. -butyl* and phenyl or both cyclohexyl and further characterized in that the ratio of the number of moles of vinyl chloride and possibly of the at least one comonomer of vinyl chloride, to the number of moles of the palladium catalyst is of at least 200.

The process according to the invention is a process for the manufacture of a vinyl chloride polymer involving the use of a palladium catalyst. Advantageously, the process according to the invention is a process for the manufacture of a vinyl chloride polymer by coordination - insertion polymerization of vinyl chloride and possibly of at least one comonomer of vinyl chloride.

The expression "coordination - insertion polymerization" is understood to mean, for the purposes of the present invention, an addition polymerization in which monomer adds to a growing macromolecule through an organometallic active center. This kind of polymerization is also often simply called insertion polymerization.

The polymer manufactured by the process according to the present invention is a vinyl chloride polymer.

In the text of the present specification, the terms "polymer", "copolymer", and "homopolymer" are used indifferently in the singular as well as in the plural.

The expression "vinyl chloride polymer" is understood to mean, for the purposes of the present invention, all polymers containing advantageously at least 50 %, preferably at least 60 %, more preferably at least 70 %, most preferably at least 75 % and particularly most preferably at least 85 % by weight of monomeric units derived from vinyl chloride (monomer). These polymers are therefore advantageously either vinyl chloride homopolymers (containing 100 % by weight of units derived from vinyl chloride) or copolymers of vinyl chloride with one or more than one ethylenically unsaturated monomers (called comonomers) selected from the vinylic esters (preferably vinyl acetate) and the (meth)acrylic monomers (preferably n-butyl acrylate and methylmethacrylate). The polymer manufactured by the process according to the invention is preferably a vinyl chloride homopolymer or a copolymer of vinyl chloride with vinyl acetate and is more preferably a vinyl chloride homopolymer. The vinyl chloride polymer manufactured by the process according to the invention is advantageously not a chlorinated copolymer from ethylene and vinyl chloride, such as the one obtained in Angew. Chem. Int. Ed.

The palladium catalysts used for the polymerization selected from the palladium catalysts responding to formula I as detailed here above are advantageously named palladium phosphane-sulfonate catalysts or palladium phosphine-sulfonate catalysts.

R1 in formula I is selected from methyl, neopentyl, benzyl and other carbyls which do not contain hydrogen in beta position to the metal. Preferably, R1 is methyl.

The expression "weakly coordinated ligand", is understood to mean, for the purposes of the present invention, a ligand that dissociates under polymerization conditions from the palladium catalyst to form the active species which coordinates monomer prior to the chain growth step; "weakly coordinated" specifies that dissociation of the ligand and exchange for monomer is operated during polymerization. The tendency of "weaker" is directly correlated to "less Lewis-basic".

Examples of weakly coordinated ligands are P(*tert*.-butyl)₃, pyridine, lutidine (2,6-dimethylpyridine), dimethyl sulfoxide (dmso), acetonitrile, dialkylformamides, phosphine-oxides or methanol.

Preferably, L is P(*tert*.-butyl)₃, pyridine, lutidine or dimethyl sulfoxide. More preferably, L is is P(*tert*.-butyl)₃, lutidine or dimethyl sulfoxide. Most preferably, L is P(*tert.*-butyl)₃ or dimethyl sulfoxide and particularly most preferably L is dimethyl sulfoxide (dmso).

The palladium catalyst used for the polymerization is therefore most preferably selected from the palladium catalysts responding to formula I as defined above in which R1 is methyl, L is P*(tert*.-butyl)₃ or dimethyl sulfoxide and R2 and R3 are respectively either *tert. -butyl* and phenyl or both cyclohexyl.

The palladium catalyst used for the polymerization is therefore particularly most preferably selected from the palladium catalysts responding to formula I as defined above in which R1 is methyl, L is dimethylsulfoxide and R2 and R3 are respectively either *tert*.-butyl and phenyl or both cyclohexyl.

According to a first variant of the process according to the present invention, the catalyst used for the polymerization comprises a palladium catalyst selected from palladium catalysts responding to formula I as defined above in which R1 is methyl, L is P(*tert*.-butyl)3 or dimethyl sulfoxide and R2 and R3 are respectively *tert*.-butyl and phenyl.

Palladium catalysts according to this first variant are preferably
- (methyl) {(k²-*P*,*O*)-2-[*tert*.-butyl(phenyl)phosphino] benzenesulfonato} (dimethylsufoxide) palladium(II) (2-dmso) and
- (methyl) {(k²-*P*,*O*)-2-[*tert*.-butyl(phenyl)phosphino] benzenesulfonato} (tri-*tert*.-butylphosphine) palladium(II).

A more preferred palladium catalyst according to the first variant is the one responding to formula I as defined above in which R1 is methyl, L is dimethylsulfoxide and R2 and R3 are respectively *tert. -butyl* and phenyl i.e. (methyl) {(κ²-*P*,*O*)-2-[*tert*.-butyl(phenyl)phosphino] benzenesulfonato} (dimethylsufoxide) palladium(II) (2-dmso) represented by Formula II here below.

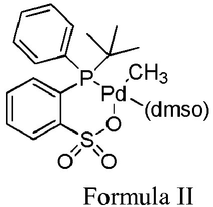

According to a second variant of the process according to the present invention, the catalyst used for the polymerization comprises a palladium catalyst selected from palladium catalysts responding to formula I as defined above in which R1 is methyl, L is P(*tert*.-butyl)₃ or dimethyl sulfoxide and R2 and R3 are both cyclohexyl.

Palladium catalysts according to this second variant are preferably
- (methyl) {(κ²-*P*,*O*)-2-[dicyclohexylphosphino]benzenesulfonato} (dimethylsufoxide) palladium(II) (4-dmso) and
- (methyl) {(κ²-*P*,*O*)-2-[dicyclohexylphosphino] benzenesulfonato} (tri-*tert*.-butylphosphine) palladium(II).

A more preferred palladium catalyst according to the second variant is the one responding to formula I as defined above in which R1 is methyl, L is dimethyl sulfoxide and R2 and R3 are both cyclohexyl i.e. (methyl) {(κ²-*P*,*O*)-2-[dicyclohexylphosphino] benzenesulfonato} (dimethylsufoxide) palladium(II) (4-dmso) represented by Formula III here below.

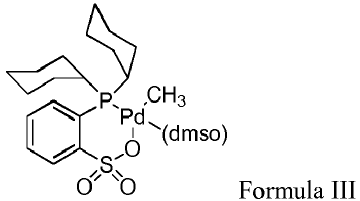

Complementary to the palladium catalyst, the catalyst used for the polymerization advantageously may comprise further a cocatalyst, advantageously selected from triphenylphosphine oxide (OPPh₃), sodium hexafluorosilicate (Na₂SiF₆), aluminium isopropoxide (Al(O*i*Pr)₃) and potassium *tert*.-butoxide (KO*t*Bu).

According to a first embodiment of the first variant of the process according to the present invention, the catalyst used for the polymerization preferably consists of a palladium catalyst selected from palladium catalysts responding to formula I as defined above for the first variant, and particularly the more preferred palladium catalyst as defined above.

According to a second embodiment of the first variant of the process according to the invention, the catalyst used for the polymerization preferably comprises a palladium catalyst selected from palladium catalysts responding to formula I as defined above for this first variant, and particularly the more preferred palladium catalyst as defined above, and a cocatalyst, advantageously selected from OPPh₃, Na₂SiF₆, Al(O*i*Pr)₃ and KO*t*Bu. The catalyst used for the polymerization more preferably comprises a palladium catalyst selected from palladium catalysts responding to formula I as defined above for this first variant, and particularly the more preferred palladium catalyst as defined above, and a cocatalyst which is Na₂SiF₆.

According to a first embodiment of the second variant of the process according to the present invention, the catalyst used for the polymerization preferably consists of a palladium catalyst selected from palladium catalysts responding to formula I as defined above for the second variant, and particularly the more preferred palladium catalyst as defined above.

According to a second embodiment of the second variant of the process according to the invention, the catalyst used for the polymerization preferably comprises a palladium catalyst selected from palladium catalysts responding to formula I as defined above for this second variant, and particularly the more preferred palladium catalyst as defined above, and a cocatalyst, advantageously selected from OPPh₃, Na₂SiF₆, Al(O*i*Pr)₃ and KO*t*Bu, preferably from OPPh₃, Na₂SiF₆, and KO*t*Bu.

The second embodiment of the first variant of the process according to the invention is preferred.

The polymerization takes place at a temperature advantageously of at least -75, preferably of at least -50, more preferably of at least -25, particularly more preferably of at least 5, most preferably of at least 20 and particularly most preferably of at least 40°C.

The polymerization takes place at a temperature advantageously of at most 110, preferably of at most 100, more preferably of at most 90, particularly more preferably of at most 80, most preferably of at most 70 and particularly most preferably of at most 60°C.

Good results can be obtained when the polymerization takes place at a temperature comprised between 5 and 90°C. Very good results can be obtained when the polymerization takes place at temperature comprised between 20 and 80°C.

The process according to the invention is characterized in that the ratio of the number of moles of vinyl chloride and possibly of the at least one comonomer of vinyl chloride, to the number of moles of the palladium catalyst, advantageously at the beginning of the polymerization, is of at least 200, preferably of at least 400, more preferably of at least 500, particularly more preferably of at least 600, most preferably of at least 700 and particularly most preferably of at least 800.

The ratio of the number of moles of VC and possibly of the at least one comonomer of vinyl chloride, to the number of moles of palladium catalyst (i.e. n_{vc}:n_{cat}), advantageously at the beginning of the polymerization, is advantageously of at most 10 000 000, preferably of at most 1 000 000, more preferably of at most 100 000, particularly more preferably of at most 10 000, most preferably of at most 5000 and particularly most preferably of at most 2500. Good results can be obtained when such ratio is at most 1500 and very good results when such ratio is at most 1000.

The process according to the invention can be a batch process or a continuous process. Preferably, the process according to the invention is a batch process.

According to a preferred mode of realization of the process according to the invention, the ratio of the number of moles of vinyl chloride and possibly of the at least one comonomer of vinyl chloride, to the number of moles of palladium catalyst at the beginning of the polymerization is comprised between 500 and 5000, preferably between 700 and 2500.

The following examples are intended to illustrate the invention without however limiting the scope thereof.

### Catalysts

The palladium catalysts used were
2-dmso i.e. (methyl) {(κ²-*P*,*O*)-2-[*tert*.-butyl(phenyl)phosphino] benzenesulfonato} (dimethylsufoxide) palladium(II), and
4-dmso i.e. (methyl) {(κ²-*P*,*O*)-2-[dicyclohexylphosphino] benzenesulfonato} (dimethylsufoxide) palladium(II).

The synthesis of 2-dmso is described here after.

To a mixture of 2-[*tert*.-butyl(phenyl)phosphonium]benzenesulfonate (967.2 mg, 3.0 mmol) and of [Pd(Me)₂(tmeda)] (759 mg, 3.0 mmol, 1 eq) (tmeda = N,N,N',N'-tetramethylethylenediamine) was added acetone (30 mL) while stirring constantly until a clear solution formed (ca 10 min at 25°C) and methane evolution ceased. After stirring for 2 h, a white precipitate was formed which was identified as 2-tmeda_{0.5} by X-Ray diffraction analysis. The solvent was removed under vacuum, the residue extracted with toluene (2 x 10 mL), the remaining solid separated by centrifugation, washed with diethyl ether (3 x 25 mL), and dried under vacuum. The obtained white material was dissolved in dmso (60 mL) at 70°C, and the solvent was removed at 70°C under vacuum to leave a glassy solid, which was ultrasonicated with diethyl ether (50 mL) for 1 h to form a white microcrystalline powder of 2-dmso after centrifugation and drying under vacuum (1443 mg, 2.77 mmol, 92 %).

The synthesis of 4-dmso is described here after.

While stirring constantly, 7 mL of methylene chloride were added to a mixture of 315 mg (0.89 mmol, 1 eq) of 2 [di(cyclohexyl)phosphonium] benzenesulfonate and 224 mg (0.89 mmol, 1eq) of [Pd(Me)₂(tmeda)]. This mixture was stirred for 1 h and thereafter the solvent was removed. The formed yellow solid was dissolved in ca. 100 mL of dmso. Removal of dmso in vacuo at 50°C yielded a residue which was dispersed in Et₂O. Centrifugation of this suspension yielded a white solid that was washed twice with Et₂O and twice with pentane. Drying in vacuo afforded 345 mg (0.62 mmol, 70 %) of 4-dmso.

### Other materials

Vinyl chloride supplied by SOLVAY S.A.

Tetrahydrofuran (THF) absolute, over molecular sieve (H₂O <0.005 %), containing ∼0.025 % 2,6-di-*tert*.-butyl-4-methylphenol as stabilizer, >99.5 % (GC) supplied by Sigma-Aldrich.

Toluene absolute, over molecular sieve (H₂O ≤0.005 %), ≥99.7 % (GC) supplied by Sigma-Aldrich for examples 1 to 4.

Toluene p.a. (per analysis, dried by passage through Al₂O₃-columns, deoxygenized by passage through BASF R3-11 columns) for example 5 (C).

### General procedure for the polymerization in examples 1 to 4

Polymerization was performed in a stainless steel autoclave equipped with a probe for temperature and pressure. The temperature was regulated thanks to a thermostat bath. The autoclave was opened and 50 ml of solvent previously degassed under nitrogen flow for 1 hour at ambient temperature were introduced into the autoclave. The palladium catalyst and possibly the cocatalyst were introduced in the autoclave. The autoclave was tightly closed and the reaction mixture was placed under nitrogen flux during 5 minutes under gentle agitation (< 100 rpm). Nitrogen flux was then stopped and VC (10 g, 0.154 mol) was introduced at room temperature. The exact amount of VC was determined by weighting the storage cylinder before and after the polymerization. The mixture was then stirred with 300 rpm and the autoclave was warmed to 50°C. After 24 hours, the autoclave was brought to room temperature. The VC was vented slowly and the autoclave was purged with nitrogen with a cannula for at least 1 hour. Methanol (1 g, 0.031 mol) was then introduced in the autoclave and the mixture was transferred into a 250 ml round-bottom flask. The solvent was removed in vacuo to yield a crude product which was solubilised in 5 ml THF and suspended in 20 ml methanol leading to the formation of a precipitate which was then filtered off. The precipitate was then dried in vacuum at 25°C and weighted. When no precipitate was obtained, the filtrate was recovered, the solvent was removed thereof in vacuo and a residual product was obtained.

### Characterization of the products obtained in examples 1 to 4 by ¹H NMR and ¹³C NMR

The products obtained at the issue of the polymerization (the precipitate or the residual product) were characterized by ¹H NMR on a Bruker AVANCE 500 MHz spectrometer (sample dissolved in deuterated THF, 30°C) and by ¹³C NMR on a Bruker AVANCE 400 MHz (sample dissolved in deuterated dioxane, 50°C).

### Examples 1 to 4 (according to the invention)

Examples 1 to 4 were performed according to the general procedure for the polymerization detailed above.

All the conditions and results are summarized in Table 1 below.

n_{VC}:n_{cat} is the ratio of the number of moles of VC to the number of moles of palladium catalyst at the beginning of the polymerization.

TON is the turnover number i.e. the ratio of the number of moles of monomer in polymer to the number of moles of palladium catalyst.

### Example 5(C) (comparative)

Polymerization in example 5(C) was performed in a Büchi Ecoclave reactor with a Cyclone 300 stirrer and a 200 mL gall vessel, equipped with a heating jacket. VC was condensed into the reactor at -22°C for a defined period of time. The exact amount of VC was determined by weighting the storage cylinder before and after the polymerization. 100 mL of toluene were added via cannula transfer. After adding a solution of the palladium catalyst in a small amount of dichloromethane, the reaction media was stirred with 500 rpm, and the reactor was warmed to the polymerization temperature (the start of the polymerization could be observed by an emerging turbidity at about 40°C). After two hours, the reactor was brought to room temperature. The VC was vented slowly and the reactor was purged with nitrogen with a cannula for at least 30 minutes. The reactor was evacuated several times carefully and the reaction mixture was transferred into a round-bottom flask. The solvent was then removed in vacuo in order to yield the crude polymer but it was observed that no polymer was obtained.

All the conditions and results are summarized in table I below as for examples 1 to 4.

**Table 1**

| Example | Catalyst | Cocatalyst | Solvent | T (°C) | Amount catalyst [mmol] | Amount cocatalyst [mmol] | VC [mmol] | n_{VC}:n_{cat} | Weight of precipitate [mg] | TON |
|---|---|---|---|---|---|---|---|---|---|---|
| 1 | 2-dmso | - | Toluene | 50 | 0,16 | - | 154 | 962 | * | < 0.5 |
| 2 | 2-dmso | - | THF | 50 | 0.16 | - | 154 | 962 | * | < 0.5 |
| 3 | 2-dmso | Na₂SiF₆ | THF | 50 | 0.16 | 0.16 | 154 | 962 | * | < 0.5 |
| 4 | 4-dmso | - | Toluene | 50 | 0.16 | - | 154 | 962 | * | < 0.5 |
| 5(C) | 2-dmso | - | Toluene | 40 | 0.045 | - | 8 | 178 | ** | - |

| | | | | | | | | | | |
|---|---|---|---|---|---|---|---|---|---|---|
| * : no precipitate was obtained but PVC was detected in the obtained residual product. ** : no polymer (PVC) was obtained | | | | | | | | | | |

In examples 1 to 4, PVC was obtained. Indeed, the characterization of the product obtained in each of examples 1 to 4 by ¹H NMR identified the signals which are characteristic of PVC i.e. the signal between 2 and 2.7 ppm for the -CHCl-C*H*₂- group and the one between 4.3 and 4.8 ppm for the -C*H*Cl-CH₂group. Similarly, the characterization of the product obtained in each of examples 1 to 4 by ¹³C NMR identified the signal which is characteristic of PVC i.e. the one at about 56 ppm for the -CHCl- group. The obtained polymers are therefore PVC without any doubt.

In example 5(C), no polymer (PVC) was obtained.

## Claims

1. Process for the manufacture of a vinyl chloride polymer by polymerization of vinyl chloride and possibly of at least one comonomer of vinyl chloride, **characterized in that** the catalyst used for the polymerization comprises a palladium catalyst selected from palladium catalysts responding to formula I 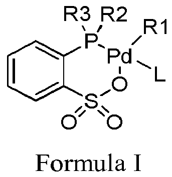 in which R1 is selected from methyl, neopentyl, benzyl and other carbyls which do not contain hydrogen in beta position to the metal, L is a weakly coordinated ligand and R2 and R3 are respectively either *tert.*-butyl and phenyl or both cyclohexyl and further **characterized in that** the ratio of the number of moles of vinyl chloride and possibly of the at least one comonomer of vinyl chloride, to the number of moles of the palladium catalyst is of at least 200.

2. Process according to Claim 1, **characterized in that** R1 is methyl.

3. Process according to either Claim 1 or 2, **characterized in that** L is P(*tert*.-butyl)₃ or dimethyl sulfoxide.

4. Process according to any one of Claims 1 to 3, **characterized in that** L is dimethyl sulfoxide.

5. Process according to Claim 4, **characterized in that** R2 and R3 are respectively *tert. -butyl* and phenyl.

6. Process according to Claim 5, **characterized in that** the catalyst used for the polymerization consists of a palladium catalyst selected from palladium catalysts responding to formula I.

7. Process according to Claim 5, **characterized in that** the catalyst used for the polymerization comprises a palladium catalyst selected from palladium catalysts responding to formula I and a cocatalyst which is Na₂SiF₆.

8. Process according to Claim 4, **characterized in that** R2 and R3 are both cyclohexyl.

9. Process according to Claim 8, **characterized in that** the catalyst used for the polymerization consists of a palladium catalyst selected from palladium catalysts responding to formula I.

10. Process according to any one of Claims 1 to 9 wherein the vinyl chloride polymer is either a vinyl chloride homopolymer or a copolymer of vinyl chloride with one or more than one ethylenically unsaturated monomers selected from the vinylic esters and the (meth) acrylic monomers.

11. Process according to any one of Claims 1 to 10, wherein the vinyl chloride polymer is a vinyl chloride homopolymer or a copolymer of vinyl chloride with vinyl acetate.

12. Process according to any one of Claims 1 to 11, wherein the vinyl chloride polymer is a vinyl chloride homopolymer.

13. Process according to any one of Claims 1 to 12, wherein the ratio of the number of moles of vinyl chloride and possibly of the at least one comonomer of vinyl chloride, to the number of moles of palladium catalyst at the beginning of the polymerization is comprised between 500 and 5000.

14. Process according to any one of Claims 1 to 13, wherein the ratio of the number of moles of vinyl chloride and possibly of the at least one comonomer of vinyl chloride, to the number of moles of palladium catalyst at the beginning of the polymerization is comprised between 700 and 2500.
